(19) Europäisches Patentamt / European Patent Office / Office européen des brevets

(11) **EP 3 304 019 B1**

(12) # EUROPÄISCHE PATENTSCHRIFT

(45) Veröffentlichungstag und Bekanntmachung des Hinweises auf die Patenterteilung:
**10.08.2022 Patentblatt 2022/32**

(21) Anmeldenummer: **16721811.4**

(22) Anmeldetag: **10.05.2016**

(51) Internationale Patentklassifikation (IPC):
**G01L 9/00** (2006.01)    **G01L 19/14** (2006.01)

(52) Gemeinsame Patentklassifikation (CPC):
**G01L 19/145; G01L 9/0075**

(86) Internationale Anmeldenummer:
**PCT/EP2016/060456**

(87) Internationale Veröffentlichungsnummer:
**WO 2016/198227 (15.12.2016 Gazette 2016/50)**

(54) **DRUCKSENSOR MIT EINER AKTIVHARTLÖTUNG**

PRESSURE SENSOR WITH ACTIVE BRAZING

CAPTEUR DE PRESSION À BRASURE FORTE ACTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2015 DE 102015108950**

(43) Veröffentlichungstag der Anmeldung:
**11.04.2018 Patentblatt 2018/15**

(73) Patentinhaber: **Endress+Hauser SE+Co. KG
79689 Maulburg (DE)**

(72) Erfinder:
• **ROSSBERG, Andreas
  79713 Bad Säckingen (DE)**
• **SCHMIDT, Elke
  79713 Bad Säckingen (DE)**
• **RETTENMAYR, Markus
  07749 Jena (DE)**
• **SIEGMUND, Peter
  07749 Jena (DE)**
• **KÜHN, Uta
  01728 Bannewitz/Börnchen (DE)**
• **PAULY, Simon
  01159 Dresden (DE)**
• **PONATH, Nils
  79539 Lörrach (DE)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
EP-A2- 0 490 807        DE-A1-102010 043 119
DE-A1-102012 110 618

• **NEUMEIER J ET AL: "Capacitive-based dilatometer cell constructed of fused quartz for measuring the thermal expansion of solids", REVIEW OF SCIENTIFIC INSTRUMENTS, AIP, MELVILLE, NY, US, Bd. 79, Nr. 3, 13. März 2008 (2008-03-13), Seiten 33903-33903, XP012115288, ISSN: 0034-6748, DOI: 10.1063/1.2884193**

**Beschreibung**

Die Erfindung betrifft einen Drucksensor mit zwei miteinander über eine durch Aktivhartlöten eines Aktivhartlots hergestellte Aktivhartlötung verbundenen Körpern, wobei ein erster der zwei Körper eine mit einem Druck beaufschlagbare, druckabhängig elastisch verformbare Messmembran, insb. eine keramischen Messmembran, ist und der zweite der zwei Körper ein Grundkörper, insb. ein keramischer Grundkörper ist. Der Grundkörper und die Messmembran sind mit einer Aktivhartlötung verbunden, welche Aktivhartlötung einen äußeren Rand der Messmembran unter Einschluss einer Druckkammer mit einem äußeren Rand einer der Messmembran zugewandten Stirnseite des Grundkörpers verbindet. Ferner betrifft die Erfindung ein Verfahren zur Herstellung eines solchen Drucksensors.

Als Absolutdrucksensoren, als Relativdrucksensoren sowie als Differenzdrucksensoren ausgebildete Drucksensoren finden heute weit gefächert Anwendung in nahezu allen Bereichen der industriellen Messtechnik.

In der EP 490 807 A1 ist ein keramischer Drucksensor beschrieben mit

- einer mit einem Druck beaufschlagbaren, druckabhängig elastisch verformbaren, keramischen Messmembran,
- einem keramischen Grundkörper und
- einer einen äußeren Rand der Messmembran unter Einschluss einer Druckkammer mit einem äußeren Rand einer der Messmembran zugewandten Stirnseite des Grundkörpers verbindenden Aktivhartlötung.

Zur Reduzierung von thermomechanischen Spannungen innerhalb des Drucksensors, insb. im Bereich der Messmembran, werden für die Aktivhartlötungen bevorzugt Aktivhartlote eingesetzt, die einen an den thermischen Ausdehnungskoeffizienten der Keramik von Grundkörper und Messmembran angepassten thermischen Ausdehnungskoeffizienten aufweisen. In Verbindung mit Keramiken aus Aluminiumoxid eignen sich hierzu die in der EP 490 807 A1 genannten eine Zr-Ni-Legierung und Titan aufweisenden ternären Aktivhartlote.

In der DE 10 2012 110 618 A1 ist ein keramischer Drucksensor mit einer über eine Aktivhartlötung mit einem keramischen Grundkörper verbundenen Messmembran beschrieben, für deren Herstellung ein Lotkern aus einem Aktivhartlot eingesetzt wurde, der auf dessen der Messmembran und auf dessen dem Grundkörper zugewandten Stirnseite jeweils eine Grenzschicht aufweist, die aus einem Aktivhartlot besteht, das eine niedrigere Liquidustemperatur aufweist als das Aktivhartlot des Lotkerns. Es ist eine Grenzschicht genannt, die die Komponenten Zirkonium, Nickel, Titan und Aluminium aufweist. Die Fügung von Messmembran und Grundkörper erfolgt hier bei einer Löttemperatur, bei der die Grenzschichten aufschmelzen, während der Lotkern im Wesentlichen unverändert bleibt. Dabei wird für den Lotkern ein zum Beispiel durch Variation der Zusammensetzung eines Zirkonium, Nickel und Titan aufweisenden Aktivhartlots ermitteltes Aktivhartlot eingesetzt, das einen thermischen Ausdehnungskoeffizienten aufweist, der dem der Keramik von Messmembran und Grundkörper möglichst ähnlich ist.

Thermomechanische Spannungen im Bereich der Aktivhartlötung lassen sich jedoch auch durch die zuvor genannten Maßnahmen nicht völlig vermeiden. Dabei führen auf die Messmembran einwirkende Spannungen zu einer Veränderung der druckabhängigen Verformbarkeit derselben und beeinflussen somit die Messeigenschaften des Drucksensors. Diese regelmäßig in Abhängigkeit von der Umgebungstemperatur veränderlichen Spannungen bewirken eine zusätzliche Temperaturabhängigkeit der Messergebnisse. Darüber hinaus können sie eine vom zeitlichen Verlauf der Umgebungstemperatur und/oder des zu messenden Drucks abhängige Hysterese der Messergebnisse bewirken, die zu einer Verschlechterung der erzielbaren Messgenauigkeit führt.

Es ist eine Aufgabe der Erfindung, einen Drucksensor mit verbesserten Messeigenschaften anzugeben.

Hierzu umfasst die Erfindung einen Drucksensor gemäß Anspruch 1.

Eine Ausgestaltung umfasst einen erfindungsgemäßen Drucksensor, bei dem

- mindestens einer der Körper, insb. die Messmembran oder die Messmembran und der Grundkörper, aus einer Oxidkeramik, insb. aus Aluminiumoxid, besteht, und
- das Aktivhartlot die Komponenten Zirkonium, Nickel und Titan aufweist.

Gemäß einer Weiterbildung der letztgenannten Ausgestaltung enthält das Aktivhartlot Kupfer und/oder Aluminium.

Eine Weiterbildung umfasst einen erfindungsgemäßen Drucksensor, bei dem die Aktivhartlötung aus einem Aktivhartlot hergestellt ist, das die Zusammensetzung $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$, oder $Zr_{11}Ni_8Ti_{34}Cu_{47}$ aufweist.

Weiter umfasst die Erfindung ein Verfahren zur Herstellung eines erfindungsgemäßen Drucksensors, gemäß dem das Aktivhartlot zur Herstellung der Aktivhartlötung des Drucksensors durch ein Verfahren bestimmt wird, bei dem mindestens eine Messung durchgeführt wird, bei der ein thermischer Ausdehnungskoeffizient einer mit einem Aktivhartlot ausführten Aktivhartlötung bestimmt wird, deren Abmessungen gleich den Abmessungen der Aktivhartlötung des Drucksensors sind und mittels welcher Aktivhartlötung zwei Messkörper, insb. zwei Körper aus dem Werkstoff des Körpers des Drucksensors, an den die Anpassung erfolgt, miteinander verbunden sind.

Eine Weiterbildung dieses Verfahrens sieht vor, dass die Messkörper auf deren dem jeweils anderen Messkörper zugewandten Stirnseite jeweils eine Elektrode aufweisen und die Elektroden einen Kondensator mit einer von deren von einer temperaturabhängigen Höhe der Aktivhartlötung abhängigen Elektrodenabstand abhängigen Kapazität bilden, und wobei bei der Durchführung der mindestens einen Messung

- die Kapazität des Kondensators bei mindestens zwei verschiedenen Temperaturen der Aktivhartlötung gemessen wird und anhand deren Abhängigkeit von der Höhe der Aktivhartlötung, insb. anhand deren Abhängigkeit von der Höhe der Aktivhartlötung und einer Temperaturabhängigkeit der gemessenen Kapazitäten, insb. einer von einer Temperaturabhängigkeit der Elektrodenflächen der Elektroden abhängige Temperaturabhängigkeit der gemessenen Kapazitäten, der thermische Ausdehnungskoeffizient der Aktivhartlötung bestimmt wird.

Eine Weiterbildung des letztgenannten Verfahrens umfasst ein Verfahren, bei dem

- die Elektroden baugleich und kreisscheibenförmig sind, und
- die Temperaturabhängigkeit der Elektrodenflächen der Elektroden anhand eines temperaturabhängen Durchmesser der Elektroden berücksichtigt wird, der näherungsweise linear mit einem Elektrodenausdehnungskoeffizient mit der Temperatur ansteigt.

Eine Ausgestaltung der letztgenannten Weiterbildung sieht vor, dass der Elektrodenausdehnungskoeffizient anhand von Kapazitätsmessungen bestimmt wird, welche Kapazitätsmessungen mit einer ersten Vorrichtung und mit einer zweiten Vorrichtung ausgeführt werden,
wobei die erste Vorrichtung umfasst:

- die zwei Messkörper
- eine Heizvorrichtung und
- einer an die Elektroden angeschlossenen Messchaltung, welche Messchaltung die Kapazität des Kondensators bei den mindestens zwei verschiedenen Temperaturen der Aktivhartlötung misst,

und wobei die zweite Vorrichtung sich von der ersten Vorrichtung ausschließlich darin unterscheidet, dass der Durchmesser der Elektroden der zweiten Vorrichtung von dem Durchmesser der Elektroden der ersten Vorrichtung verschieden ist.

In einer Ausgestaltung der letztgenannten Ausgestaltung werden Elektroden verwendet werden, welche Elektroden scheibenförmig sind und im Vergleich zur Höhe der Aktivhartlötung eine Scheibendicke aufweisen, die in der Größenordnung von zwei Zehnerpotenzen geringer ist als die Höhe der Aktivhartlötung.

Eine Weiterbildung des erfindungsgemäßen Verfahrens umfasst eine Verfahren, bei dem das Aktivhartlot, aus dem die Aktivhartlötung des Drucksensors hergestellt wird, ermittelt wird, indem

- zur Aktivhartlötung der Körper des Drucksensors geeignete Testlote unterschiedlicher Zusammensetzung, insb. Komponenten eines zur Aktivhartlötung der Körper geeigneten Ausgangslots enthaltende Testlote, ermittelt werden,
- die thermischen Ausdehnungskoeffizienten von mit den Testloten erzeugten Aktivhartlötungen gemessen werden, und
- anhand der gemessenen Ausdehnungskoeffizienten dasjenige Testlot als Aktivhartlot ermittelt wird, bei dem eine Differenz zwischen dem thermischen Ausdehnungskoeffizienten der damit hergestellten Aktivhartlötung und dem thermischen Ausdehnungskoeffizienten mindestens eines der Körper betragsmäßig den geringsten Wert aufweist.

Gemäß einer ersten Ausgestaltung der letztgenannten Weiterbildung

- besteht mindestens eines der Testlote ausschließlich aus den Komponenten des Ausgangslots, und/oder
- weist mindestens eines der Testlote zusätzlich zu den Komponenten des Ausgangslots mindestens eine weitere Komponente auf.

Gemäß einer zweiten Ausgestaltung des letztgenannten Weiterbildung

- besteht mindestens einer der Körper aus Oxidkeramik, insb. aus Aluminiumoxid,
- weisen die Testlote die Komponenten Zirkonium, Nickel und Titan auf, und
- besteht mindestens ein Testlot ausschließlich aus Zirkonium, Nickel und Titan und/oder weist mindestens ein Testlot Zirkonium, Nickel und Titan und mindestens eine weitere Komponente, insb. Kupfer oder Aluminium, auf.

Eine Weiterbildung des erfindungsgemäßen Verfahrens umfasst ein Verfahren, bei dem ein thermischer Ausdehnungskoeffizient einer mit einem Aktivhartlot, insb. einem Ausgangslot oder einem Testlot, ausführten Aktivhartlötung bestimmt wird, das die Zusammensetzung $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$, oder $Zr_{11}Ni_8Ti_{34}Cu_{47}$ aufweist.

Die Erfindung und deren Vorteile werden nun anhand der Figuren der Zeichnung, in denen ein Ausführungsbeispiel dargestellt ist, näher erläutert. Gleiche Elemente sind in den Figuren mit gleichen Bezugszeichen versehen.

Fig. 1 zeigt: einen keramischen Drucksensor; und

Fig. 2 zeigt: eine Anordnung zur Messung des thermischen Ausdehnungskoeffizienten einer Aktivhartlötung, die in einer Ausgestaltung des erfindungsgemäßen Verfahrens zum Einsatz kommt.

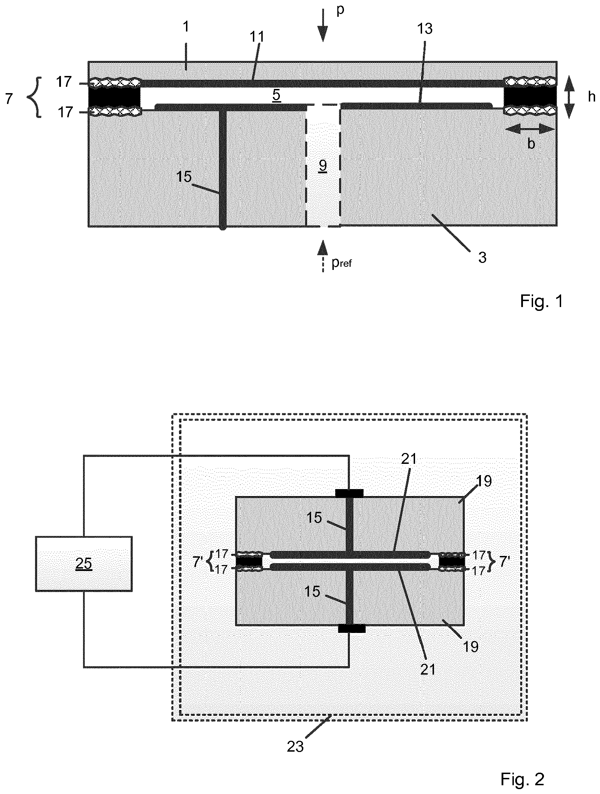

Fig. 1 zeigt einen Schnitt durch ein Ausführungsbeispiel eines Drucksensors. Dieser umfasst eine mit einem Druck p beaufschlagbare und druckabhängig elastisch verformbare Messmembran 1, die auf einem Grundkörper 3 angeordnet ist. Die Messmembran 1 und vorzugsweise auch der Grundkörper 3 bestehen vorzugsweise aus Keramik, z.B. aus Aluminiumoxid ($Al_2O_3$), und sind miteinander unter Einschluss einer Druckkammer 5 druckdicht verbunden. Hierzu ist ein äußerer Rand einer dem Grundkörper 3 zugewandten Seite der Messmembran 1 unter Einschluss der Druckkammer 5 mittels einer Aktivhartlötung 7 mit einem äußeren Rand einer der Messmembran 1 zugewandten Stirnseite des Grundkörpers 3 verbunden. Der Drucksensor umfasst also einen Verbund aus zwei über eine Aktivhartlötung 7 miteinander verbundenen Körpern.

Der dargestellte Drucksensor kann als Absolutdrucksensor ausgebildet sein. In dem Fall ist die unter der Messmembran 1 eingeschlossene Druckkammer 5 evakuiert. Alternativ kann er als Relativdrucksensor ausgebildet werden, indem der Druckkammer 5 über eine durch den Grundkörper 3 hindurch führende, in Fig. 1 gestrichelt eingezeichnete Bohrung 9 ein Referenzdruck $p_{ref}$, z.B. ein Atmosphärendruck, zugeführt wird, bezogen auf den der auf die Messmembran 1 einwirkende Druck p erfasst werden soll. Die Erfindung ist natürlich völlig analog auch in Verbindung mit als Differenzdrucksensoren ausgebildeten Drucksensoren einsetzbar, die mindestens eine über eine Aktivhartlötung mit einem Grundkörper verbundene Messmembran aufweisen.

Der Drucksensor umfasst einen elektromechanischen Wandler, der dazu dient, eine druckabhängige Verformung der Messmembran 1 messtechnisch zu erfassen. Dieser umfasst z.B. mindestens einen Kondensator mit einer sich in Abhängigkeit von der druckbedingten Auslenkung der Messmembran 1 verändernden Kapazität, der eine auf einer dem Grundkörper 3 zugewandten Seite der Messmembran 1 aufgebrachte Elektrode 11 und eine auf einer der Messmembran 1 zugewandten Stirnseite des Grundkörpers 3 aufgebrachte Gegenelektrode 13 aufweist. Die druckabhängige Kapazität dieses Kondensators bzw. deren Änderungen werden über eine an die Elektrode 11 und die Gegenelektrode 13 angeschlossene, hier nicht dargestellte Messelektronik erfasst und in ein druckabhängiges Messsignal umgewandelt, das dann zur Anzeige, zur weiteren Verarbeitung und/oder Auswertung zur Verfügung steht.

Erfindungsgemäße Drucksensoren werden hergestellt, indem Messmembran 1 und Grundkörper 3 vorgefertigt werden und die Elektrode 11 und die Gegenelektrode 13 auf die entsprechenden Stirnflächen von Messmembran 1 und Grundkörper 3 aufgebracht, z.B. flächig aufgesputtert, werden. Dabei kann zugleich ein elektrischer Anschluss der Gegenelektrode 13 vorgesehen werden, indem ein Kontaktstift 15, z.B. ein Tantalstift, in eine durch den Grundkörper 3 führende Bohrung eingesetzt wird, der eine elektrisch leitfähige Verbindung zur Gegenelektrode 13 herstellt. Nachfolgend werden Messmembran 1 und Grundkörper 3 unter Einschluss der Druckkammer 5 durch Aktivhartlöten druckdicht miteinander verbunden. Hierzu wird zwischen den durch die Aktivhartlötung 7 zu verbindenden äußeren einander zugewandten Rändern von Grundkörper 3 und Messmembran 1 eine Lotschicht aus einem Aktivhartlot angeordnet. Die Lotschicht kann z.B. auf die in der EP 490 807 A1 beschriebene Weise als Lotpaste aufgetragen oder in Form eines vorgefertigten Lotformteils, z.B. eines Lotrings, eingebracht werden. Hierdurch lassen sich Aktivhartlötungen 7 mit Höhe h von größer gleich 30 $\mu$m herstellen. Eine geringere Mindesthöhe der Messmembran 1 und Grundkörper 3 verbindenden Aktivhartlötung 7 und damit einhergehend ein zur Erzielung einer höheren Messgenauigkeit vorteilhafterer geringerer Elektrodenabstand kann gemäß einem in der DE 10 2010 043 119 A1 beschriebenen Verfahren erzielt werden, indem die Lotschicht mittels Gasphasenabscheidung auf eine der Fügeflächen oder anteilig auf beide Fügeflächen aufgebracht wird. Hierdurch können Aktivhartlötungen 7 mit einer Höhe h in der Größenordnung von 10 $\mu$m hergestellt werden.

Nach dem Einbringen bzw. Aufbringen der Lotschicht wird die durch den Grundkörper 3, die Lotschicht und die Messmembran 1 gebildete Anordnung insgesamt unter Vakuum auf eine oberhalb der Schmelztemperatur des Aktivhartlots liegende Löttemperatur aufgeheizt und dort über einen längeren Zeitraum, insb. einen Zeitraum von 5 min bis 15 min, gehalten. Alternativ kann ein in der DE 10 2011 005 665 A1 beschriebenes Aktivhartlötverfahren verwendet werden, bei dem die Lotschicht unter Vakuum durch Laserstrahlung vollständig aufgeschmolzen wird.

Bei der Löttemperatur reagiert die aktive Komponente des Aktivhartlots mit der Keramik. Dabei wird durch Reduktion der Keramik eine mechanisch hochfeste chemische Verbindung zwischen der Keramik und dem Aktivhartlot bewirkt. Aufgrund dieser chemischen Reaktion bildet sich auf der der Messmembran 1 und auf der dem Grundkörper 3 zugewandten Seite der Aktivhartlötung 7 jeweils eine Verbindungsschicht 17 aus, die sich sowohl im Hinblick auf deren Zusammensetzung als auch im Hinblick auf deren Eigenschaften vom verwendeten Aktivhartlot unterscheidet. Die Verbindungsschichten 17 weisen eine Schichtdicke in der Größenordnung von wenigen Mikrometern, insb. in der Größen-

ordnung von 2 μm bis 3 μm, auf. Insb. bei Aktivhartlötungen 7 mit vergleichsweise geringer Höhe h, insb. einer Höhe h in der Größenordnung von 10 μm bis 30 μm, kommt ihnen somit ein nicht zu vernachlässigender Anteil an der Höhe h der Aktivhartlötung 7 zu.

Aufgrund der durch die chemischen Reaktionen eingetretenen Veränderungen weist die Aktivhartlötung 7 einen von deren Abmessungen und den Werkstoffen der damit verbundenen Körper abhängigen thermischen Ausdehnungskoeffizienten auf, der von dem thermischen Ausdehnungskoeffizienten des zu deren Herstellung verwendeten Aktivhartlots verschieden ist. Dabei ist der Unterschied zwischen diesen beiden thermischen Ausdehnungskoeffizienten umso größer, je größer der Anteil der Verbindungsschichten 17 an der Aktivhartlötung 7 ist.

So weist beispielsweise ein Zirkonium, Nickel und Titan mit einer Zusammensetzung in Atom-% von $Zr_{63}Ni_{22}Ti_{15}$ enthaltendes Aktivhartlot in einem Temperaturbereich von 30°C bis 125°C einen thermischen Ausdehnungskoeffizienten von 11 ppm/K auf, während eine aus diesem Aktivhartlot hergestellte kreisringförmige zwei Körper aus Aluminiumoxid ($Al_2O_3$) verbindende Aktivhartlötung 7 mit einem Innendurchmesser von 25 mm und einem rechteckigem Querschnitt mit einer Höhe h von 30 μm und einer Breite b von 3,6 mm in diesem Temperaturbereich einen thermischen Ausdehnungskoeffizienten von 8,7 ppm/K aufweist. Keramiken aus Aluminiumoxid ($Al_2O_3$) weisen einen thermischen Ausdehnungskoeffizienten in der Größenordnung von 7 ppm/K bis 8 ppm/K auf. Die mit $Zr_{63}Ni_{22}Ti_{15}$ ausgeführte Aktivhartlötung 7 weist hier einen sehr gut an diese Keramiken angepassten Ausdehnungskoeffizienten auf, während der Ausdehnungskoeffizienten des verwendeten Aktivhartlots $Zr_{63}Ni_{22}Ti_{15}$ deutlich von dem der Keramik abweicht.

Während im Stand der Technik zur Herstellung der Aktivhartlötung 7 Aktivhartlote eingesetzt werden, die einen an den thermischen Ausdehnungskoeffizienten der Körper angepassten Ausdehnungskoeffizienten aufweisen, wird bei den erfindungsgemäßen Drucksensoren stattdessen ein Aktivhartlot eingesetzt, bei dem die damit erzeugte Aktivhartlötung 7 einen an den thermischen Ausdehnungskoeffizienten mindestens eines der Körper angepassten thermischen Ausdehnungskoeffizienten aufweist. Erfindungsgemäß ist die Aktivhartlötung 7 also eine mittels eines Aktivhartlots hergestellte Aktivhartlötung 7, die im verlöteten Zustand einen thermischen Ausdehnungskoeffizienten aufweist, der dem mindestens eines der über die Aktivhartlötung 7 verbundenen Körper möglichst ähnlich ist.

Dementsprechend ist die Differenz zwischen dem thermischen Ausdehnungskoeffizienten der Aktivhartlötung 7 und dem thermischen Ausdehnungskoeffizienten des Körpers, an den die Anpassung erfolgt, bei einem erfindungsgemäßen Drucksensor betragsmäßig geringer als die Differenz zwischen dem thermischen Ausdehnungskoeffizienten des Aktivhartlots und dem thermischen Ausdehnungskoeffizienten dieses Körpers.

Weisen Messmembran 1 und Grundkörper 3 unterschiedliche thermische Ausdehnungskoeffizienten auf, so erfolgt die Anpassung vorrangig an den Ausdehnungskoeffizienten der Messmembran 1, da auf die Messmembran 1 zurückwirkende thermomechanische Spannungen die Messeigenschaften des Drucksensors in stärkerem Maße beeinträchtigen als auf den Grundkörper 3 zurückwirkende Spannungen.

Der thermische Ausdehnungskoeffizient des Aktivhartlots kann beispielsweise durch eine Dilatometer-Messung bestimmten werden, indem ein Körper aus dem Aktivhartlot in ein Dilatometer eingespannt, und dessen Längenausdehnung in Abhängigkeit von der Temperatur gemessen wird.

Analog kann auch die von der Temperatur abhängige Höhenänderung der Höhe h der Aktivhartlötung 7 als Maß für den thermischen Ausdehnungskoeffizient der Aktivhartlötung 7 herangezogen werden. Diese kann grundsätzlich anhand der Temperaturabhängigkeit der Höhenänderung des Verbunds der beiden über die Aktivhartlötung 7 verbundenen Körper, der Höhe der Aktivhartlötung 7, den Höhen der beiden Körper und den separat z.B. durch eine Dilatometer-Messung bestimmten thermischen Ausdehnungskoeffizienten der Körper bestimmt werden. Bei Drucksensoren besteht hierbei jedoch das Problem, dass dabei ggfs. entstehende thermomechanische Spannungen Verformungen, insb. der vergleichsweise dünnen Messmembran 1, verursachen können, die zu Messfehlern bei der Bestimmung des Ausdehnungskoeffizienten der Aktivhartlötung 7 führen können.

Zur Messung des thermischen Ausdehnungskoeffizienten der Aktivhartlötung 7 wird daher vorzugsweise eine in Fig. 2 dargestellte Vorrichtung eingesetzt. Diese umfasst zwei über eine Aktivhartlötung 7' miteinander verbundene Messkörper 19, die aus dem Werkstoff des Körpers des Drucksensors, hier also vorzugsweise aus der Keramik der Messmembran 1, bestehen, an den die Anpassung erfolgen soll. Zur Herstellung der die Messkörper 19 verbindenden Aktivhartlötung 7' wird das gleiche Aktivhartlot eingesetzt, das auch zur Herstellung der Aktivhartlötung 7, deren Ausdehnungskoeffizient gemessen werden soll, eingesetzt wird. Darüber hinaus weist die die Messkörper 19 verbindenden Aktivhartlötung 7' die gleichen Abmessungen auf wie die Aktivhartlötung 7, deren Ausdehnungskoeffizient gemessen werden soll. Vorliegend ist die Aktivhartlötung 7', genau wie die des Drucksensors, als zu einem Ring geschlossene Aktivhartlötung 7' mit rechteckigem Querschnitt der Höhe h und der Breite b ausgebildet. Jeder der Messkörper 19 weist auf dessen dem jeweils anderen Messkörper 19 zugewandten Stirnseite eine Elektrode 21 auf. Die beiden Elektroden 21 sind planparallel zueinander angeordnet und bilden einen Kondensator, dessen Kapazität umgekehrt proportional zum Elektrodenabstand zwischen den Elektroden 21 ist. Der Elektrodenabstand ist abhängig von der Höhe h der Aktivhartlötung 7' und verändert sich demensprechend in Abhängigkeit von der Temperatur T entsprechend dem thermischen Ausdehnungskoeffizienten der Aktivhartlötung 7'. Die Messung des Ausdehnungskoeffizienten erfolgt, indem die Aktivhartlötung 7' mittels einer Heizvorrichtung 23, z. B. einem Ofen, auf mindestens zwei verschiedene Temperaturen aufgeheizt wird und die von der Temperatur der Aktivhartlötung 7' abhängigen Kapazitäten des Kondensators gemessen werden. Hierzu sind die Elektroden 21 über durch die Messkörper 19 hindurch verlaufende Kontaktstifte 15 an eine Messschaltung 25 angeschlossen, die die Kapazität des Kondensators bei mindestens zwei verschiedenen Temperaturen bestimmt, und anhand der in Abhängigkeit von der Temperatur gemessenen Kapazitäten und deren Abhängigkeit von der ebenfalls temperaturabhängigen Höhe h der Aktivhartlötung 7' den thermischen Ausdehnungskoeffizienten der Aktivhartlötung 7' bestimmt.

Die Bestimmung des thermischen Ausdehnungskoeffizienten der Aktivhartlötung 7' anhand der Kapazitäten weist einen von den Temperaturen, bei denen die Kapazitäten gemessen werden, abhängigen Messfehler auf. Dieser Messfehler ist insb. abhängig von einer Temperaturabhängigkeit der gemessenen Kapazitäten.

Eine Ursache hierfür ist die thermische Ausdehnung der Messkörper 19 und der damit verbundenen Elektroden 21. Sie führt dazu, dass sich die wirksame Elektrodenflächen der Elektroden 21 und damit auch die Kapazität der Kondensators in Abhängigkeit von der Temperatur verändern.

Dieser Messfehler wird vorzugsweise dadurch reduziert, dass eine Temperaturabhängigkeit der Größe der Elektrodenflächen der Elektroden 21 bei der Bestimmung des Ausdehnungskoeffizienten berücksichtigt wird.

Dabei gilt für die bei einer Temperatur T gemessene Kapazität C des Kondensators:

$$C(T) = \varepsilon \, A(T)/h(T),$$

wobei $\varepsilon$ die Dielektriztätskonstante des den Kondensator füllenden Mediums, A(T) die temperaturabhängige Elektrodenfläche der Elektroden 21 und h(T) die temperaturabhängige Höhe der Aktivhartlötung 7' ist.

Verwendet man zwei baugleiche kreisscheibenförmigen Elektroden 21, so gilt für die temperaturabhängige Elektrodenfläche A(T):

$$A(T) = \pi/4 \, d(T)^2$$

wobei d(T) der temperaturabhänge Durchmesser der Elektroden 21 ist, der näherungsweise durch: d(T) = $[1+\alpha_E (T-T_0)]d(T_0)$ beschrieben werden kann, wobei $\alpha_E$ ein Elektrodenausdehnungskoeffizient ist.

Für die temperaturabhängige Höhe h(T) der Aktivhartlötung 7' gilt:

$$h(T) = [1 - \alpha_{AHL}(T - T_0)] \, h(T_0)$$

wobei $\alpha_{AHL}$ der thermischen Ausdehnungskoeffizienten der Aktivhartlötung 7' und $h(T_0)$ die Höhe h der Aktivhartlötung 7' bei der Temperatur $T_0$ bedeuten.

Hieraus ergibt sich dann anhand des Verhältnisse $C(T)/C(T_0)$ der bei der Temperatur T und der Temperatur $T_0$ gemessenen Kapazitäten C(T), $C(T_0)$ unter Berücksichtigung der temperaturabhängige Elektrodenfläche A(T) der thermische Ausdehnungskoeffizient $\alpha_{AHL}$ der Aktivhartlötung 7' gemäß:

$$\alpha_{AHL} = \frac{(1 + \alpha_E (T - T_0))^2 \dfrac{C(T)}{C(T_0)} - 1}{T - T_0}$$

Wie aus dieser Gleichung ersichtlich, kann der Elektrodenausdehnungskoeffizient $\alpha_E$ z.B. dadurch bestimmt werden, dass eine Referenzmessung mit einer zweiten Vorrichtung ausgeführt wird, die sich von der hier beschriebenen Vorrichtung ausschließlich dadurch unterscheidet, dass deren Elektroden 21 einen anderen Durchmesser d aufweisen. Da die thermischen Ausdehnungskoeffizienten $\alpha_{AHL}$ der identischen Aktivhartlötungen 7' der beiden Vorrichtungen identisch sind, kann durch gleichsetzten der mit den beiden Vorrichtungen jeweils als Funktion der bei den Temperaturen T und $T_0$ gemessenen Kapazitäten C(T), $C(T_0)$ und des Elektrodenausdehnungskoeffizienten $\alpha_E$ bestimmten thermischen Ausdehnungskoeffizienten $\alpha_{AHL}$ der Aktivhartlötung 7' der Elektrodenausdehnungskoeffizienten $\alpha_E$ der Elektroden 21 bestimmt werden. Dieser Elektrodenausdehnungskoeffizienten $\alpha_E$ kann nachfolgend für beliebig viele weitere Messungen von Ausdehnungskoeffizienten von Aktivhartlötungen 7' verwendet werden, die mit Vorrichtungen mit form- und materialgleichen Elektroden 21 und form- und materialgleichen Messkörpern 19 ausgeführt werden.

Die Elektroden 21 sind scheibenförmig und weisen vorzugsweise eine im Vergleich zur Höhe der Aktivhartlötung 7' sehr geringe Scheibendicke auf. Vorzugsweise weisen die Elektroden 21 eine Scheibendicke auf, die in der Größenordnung von zwei Zehnerpotenzen geringer ist, als die Höhe der Aktivhartlötung 7'. In Verbindung mit Aktivhartlötungen 7' mit einer Höhe von größer gleich 30 $\mu$m, können z.B. Elektroden 21 mit einer Scheibendicke eingesetzt werden, die kleiner gleich einem oder wenigen Zehntelmikrometern ist. Derart dünne Elektroden 21 bieten den Vorteil, dass der Einfluss einer temperatur-abhängigen Änderungen der Scheibendicke auf die Messgenauigkeit der Messung des thermischen Ausdehnungskoeffizienten der Aktivhartlötung 7' vernachlässigbar gering ist.

Die Messkörper 19 sind vorzugsweise vergleichsweise massive Körper. Hierdurch wird erreicht, dass die Messkörper 19 über einen weiten Temperaturbereich formstabil sind, und insb. durch thermomechanische Spannungen verursachte Durchbiegungen der Messkörper 19 vermieden werden. Hierzu können z.B. scheibenförmige Messkörper 19 eingesetzt werden, die eine Dicke bzw. eine Bauhöhe aufweisen, die deutlich größer als die Dicke der Messmembran 1 ist.

Die Herstellung erfindungsgemäßer Drucksensoren erfolgt vorzugsweise, indem anhand der Abmessungen der Aktivhartlötung 7 des Drucksensors vorab ein Aktivhartlot ermittelt wird, dass im verlöteten Zustand einen an den thermischen Ausdehnungskoeffizienten der Körper, insb. der Messmembran 1 angepassten thermischen Ausdehnungskoeffizienten aufweist. Hierzu wird ein Verfahren angewendet, bei dem mindestens eine Messung durchgeführt wird, bei der ein thermischer Ausdehnungskoeffizient einer mit einem Aktivhartlot ausgeführten Aktivhartlötung 7' bestimmt wird, deren Abmessungen gleich den Abmessungen der Aktivhartlötung 7 des Drucksensors sind und durch die zwei Körper, insb. zwei Körper aus dem Werkstoff des Körpers des Drucksensors, an den die Anpassung erfolgt, miteinander verbunden sind. Diese Messungen werden vorzugsweise auf die oben beschriebenen Weise ausgeführt.

Aktivhartlote, die im verlöteten Zustand einen an den thermischen Ausdehnungskoeffizienten der Keramik angepassten thermischen Ausdehnungskoeffizienten aufweisen, können zum Beispiel ermittelt werden, indem als Ausgangspunkt die Komponenten eines vorbekannten, zur Aktivhartlötung der Körper des Drucksensors geeigneten, Ausgangslots herangezogen werden. Zur Aktivhartlötung von Keramik, insb. von Aluminiumoxid, geeignete Ausgangslote sind z.B. die eingangs genannten, die Komponenten Zirkonium, Nickel und Titan enthaltenden Lote.

Hieraus werden Testlote abgeleitet, die die Komponenten des Ausgangslots in unterschiedlicher Zusammensetzung enthalten. Anschließend wird für eine Reihe von Testloten jeweils der thermische Ausdehnungskoeffizient einer damit hergestellten Aktivhartlötung 7' gemessen und diejenige Zusammensetzung ermittelt, bei der der thermische Ausdehnungskoeffizient der Aktivhartlötung 7' dem der zu verlötenden Körper am nächsten kommt.

Dabei können Testlote herangezogen werden, die ausschließlich aus den Komponenten des Ausgangslots bestehen und diese in von Testlot zu Testlot verschiedener Zusammensetzungen enthalten.

Alternativ oder zusätzlich können Testlote abgeleitet werden, die die Komponenten des Ausgangslots und mindestens eine weitere zur gezielten Erhöhung oder Erniedrigung des Ausdehnungskoeffizienten dienende Komponente K enthalten. In Verbindung mit Zirkonium, Nickel und Titan enthaltenden Ausgangsloten eignen sich hierzu insb. Kupfer und/oder Aluminium als weitere Komponente K.

So weist beispielsweise ein Vierstoffsystem der Zusammensetzung $(100-X)\% [Zr_a Ni_b Ti_c] + X\% K$, wobei a, b und c die Zusammensetzung des Ausgangslots in Atom-% angeben, und K die weitere Komponente bezeichnet, die hier entweder aus Kupfer oder aus Aluminium besteht, einen mit steigendem Anteil X der weiteren Komponente K sinkenden thermischen Ausdehnungskoeffizienten auf. Analog kann auch ein Fünfstoffsystem aus Zirkonium, Nickel, Titan, Kupfer und Aluminium als Legierung mit einem die Zusammensetzung des Ausgangslots aufweisenden ersten Anteil von $(100-Y)\%$ $[Zr_a Ni_b Ti_c]$ und einem die Komponenten Kupfer und Aluminium enthaltenden zweiten Anteil von $Y\% [Cu_d Al_e]$, ausgedrückt werden, wobei a, b und c die Zusammensetzung des Ausgangslots in Atom-% , und d und e die Zusammensetzung des zweiten Anteils in Atom-% angeben, ausgedrückt werden. Auch dieses Fünfstoffsystem weist einen von der Größe Y und der Zusammensetzung d, e des zweiten Anteils abhängigen thermischen Ausdehnungskoeffizienten auf, wobei der Ausgangswert ausgehend von dem sich der thermische Ausdehnungskoeffizient in Abhängigkeit von der Größe Y und der Zusammensetzung d, e des zweiten Anteils verändert von der Zusammensetzung des Ausgangslots abhängig ist.

Zur Veranschaulichung der Bandbreite, der auf die oben beschriebene Weise erzielbaren thermischen Ausdehnungskoeffizienten ist in der nachfolgenden Tabelle für eine Auswahl von Zirkonium, Nickel und Titan in unterschiedlicher Zusammensetzung enthaltenden Testloten, sowie von Zirkonium, Nickel und Titan sowie Kupfer und/oder Aluminium in unterschiedlicher Zusammensetzung enthaltenden Testloten der auf die oben beschriebene Weise in einem Temperaturbereich von 30 °C bis 125 °C gemessene thermische Ausdehnungskoeffizient $\alpha_{AHL}$ einer mit dem jeweiligen Testlot hergestellten kreisringförmigen zwei Messkörper 19 aus Aluminiumoxid $(Al_2O_3)$ verbindende Aktivhartlötung 7' mit einem Innendurchmesser 25 mm und einem rechteckigem Querschnitt der Höhe h = 30 μm und der Breite b = 3,6 mm angegeben.

| Zusammensetzung | $\alpha_{AHL}$ |
|---|---|
| $Zr_{63}Ni_{22}Ti_{15}$ | 8,7 ppm/K |
| $Zr_{60}Ni_8Ti_2Cu_{20}Al_{10}$ | 11,4 ppm/K |
| $Zr_{54,5}Ni_8Ti_{7,5}Cu_{20}Al_{10}$ | 8,8 ppm/K |
| $Zr_{47}Ni_{35}Ti_{18}$ | 11,6 ppm/K |
| $Zr_{58}Ni_{23}Ti_9Cu_{10}$ | 14,4 ppm/K |
| $Zr_{52,5}Ni_{14,6}Ti_5Cu_{17,9}Al_{10}$ | 12,2 ppm/K |
| $Zr_{43}Ni_{33}Ti_{24}$ | 9,3 ppm/K |
| $Zr_{11}Ni_8Ti_{34}Cu_{47}$ | 19,9 ppm/K |

Auch wenn die Erfindung vorliegend am Beispiel einer eine Messmembran 1 aus Aluminiumoxid mit einem Grundkörper 3 aus Aluminiumoxid verbindenden Aktivhartlötung 7 eines Drucksensors beschrieben ist, kann sie natürlich völlig analog auch auf andere miteinander über eine Aktivhartlötung verbundene Körper eines Drucksensors aus Aluminiumoxid oder aus anderen Werkstoffen eingesetzt werden, indem auch hier Aktivhartlötungen vorgesehen werden, die im verlöteten Zustand einen an den thermischen Ausdehnungskoeffizient der Körper angepassten thermischen Ausdehnungskoeffizienten aufweisen. Dabei gelten die obigen Ausführungen entsprechend, wobei die beiden Messkörper 19 der Vorrichtung zur Messung des Ausdehnungskoeffizienten, je nach Formgebung der Aktivhartlötung, deren Ausdehnungskoeffizient gemessen werden soll, auch über zwei oder mehr die Abmessung der Aktivhartlötung, deren Ausdehnungskoeffizient gemessen werden soll, aufweisende Aktivhartlötungen verbunden sein können, die zwischen den Messkörpern 19 derart angeordnet sind, dass sie eine planparallele Ausrichtung der Messkörper 19 bzw. der darauf angeordneten Elektroden 21 bewirken.

Da die oben in der Tabelle aufgeführten Testlote auf Aluminiumoxid eine extrem große Bandbreite von thermischen Ausdehnungskoeffizienten von 8,7 ppm/K bis 19,9 ppm/K abdecken, eignen sie sich insb. als Ausgangspunkt, um mit dem erfindungsgemäßen Verfahren für eine Vielzahl von unterschiedliche thermische Ausdehnungskoeffizienten aufweisenden Materialien jeweils ein Aktivhartlot zu ermitteln, bei dem damit ausgeführte Aktivhartlötungen einen an den thermischen Ausdehnungskoeffizienten der zu verlötenden Körper optimal angepassten thermischen Ausdehnungskoeffizienten aufweisen.

Dabei können die oben genannten Testlote bei entsprechendem Ausdehnungskoeffizienten der damit hergestellten zwei Messkörper 19 aus dem jeweiligen Material der Körper verbindenden Aktivhartlötungen 7' unmittelbar als Aktivhartlot zum Aktivhartlöten des jeweiligen Materials eingesetzt werden, oder als Ausgangslot herangezogen werden, anhand dessen dann anhand des oben beschriebenen Verfahrens ein Aktivhartlot ermittelt wird, bei dem damit hergestellte Aktivhartlötungen einen an den thermischen Ausdehnungskoeffizienten des Materials der Körper angepassten thermischen Ausdehnungskoeffizienten aufweisen.

Dabei wird jedes der genannten Testlote vorzugsweise als Aktivhartlot oder als Ausgangslot zur Ermittlung eines Aktivhartlots zur Aktivhartlötung von Körpern eingesetzt, deren thermischer Ausdehnungskoeffizient im Bereich des für das jeweilige Testlot in der Tabelle aufgeführten thermischen Ausdehnungskoeffizienten der damit ausgeführten Aktivhartlötung liegt.

Als Beispiel hierzu wird für keramische Körper aus Zirkoniumoxid mit einem thermischen Ausdehnungskoeffizienten in der Größenordnung von 11,0 ppm/K vorzugsweise $Zr_{60}Ni_8Ti_2Cu_{20}Al_{10}$ oder $Zr_{47}Ni_{35}Ti_{18}$ als Aktivhartlot oder als Ausgangslot verwendet, während für keramische Körper aus Aluminiumoxid mit einem thermischen Ausdehnungskoeffizienten in der Größenordnung von 7 ppm/K bis 8 ppm/K vorzugsweise $Zr_{63}Ni_{22}Ti_{15}$ oder $Zr_{54,5}Ni_8Ti_{7,5}Cu_{20}Al_{10}$ verwendet wird. Für Körpern aus Zirkonium- und Aluminiumoxid enthaltenden Dispersionskeramiken, die einen zwischen den Ausdehnungskoeffizienten von Zirkoniumoxid und Aluminiumoxid liegenden thermischen Ausdehnungskoeffizienten aufweisen, wird je nach Größe des Ausdehnungskoeffizienten $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{43}Ni_{33}Ti_{24}$ oder $Zr_{63}Ni_{22}Ti_{15}$ als Aktivhartlot oder als Ausgangslot verwendet. Für Körpern aus Werkstoffen mit einem thermischen Ausdehnungskoeffizienten im Bereich von 6 ppm/K bis 8 ppm/K, wie zum Beispiel Titanoxid ($TiO_2$) oder Steatit, eignen sich je nach Größe des Ausdehnungskoeffizienten insb. $Zr_{63}Ni_{22}Ti_{15}$ oder $Zr_{54,5}Ni_8Ti_{7,5}Cu_{20}Al_{10}$ als Aktivhartlot oder als Ausgangslot.

1    Messmembran
3    Grundkörper
5    Druckkammer
7    Aktivhartlötung
9    Bohrung
11   Elektrode
13   Gegenelektrode
15   Kontaktstift
17   Verbindungsschicht
19   Messkörper
21   Elektrode
23   Heizeinrichtung
25   Messschaltung

**Patentansprüche**

1.   Drucksensor, mit

- zwei miteinander über eine durch Aktivhartlöten eines Aktivhartlots hergestellte Aktivhartlötung (7) verbundene Körper, wobei ein erster der zwei Körper eine mit einem Druck (p) beaufschlagbare, druckabhängig elastisch verformbare Messmembran (1), insb. eine keramische Messmembran (1), ist und der zweite der zwei Körper ein Grundkörper (3), insb. ein keramischer Grundkörper (3), ist, wobei der Grundkörper (3) und die Messmembran (1) mit einer Aktivhartlötung (7) verbunden sind, welche Aktivhartlötung (7) einen äußeren Rand der Messmembran (1) unter Einschluss einer Druckkammer (5) mit einem äußeren Rand einer der Messmembran (1) zugewandten Stirnseite des Grundkörpers (3) verbindet,
- wobei die Aktivhartlötung (7) einen von den Abmessungen der Aktivhartlötung (7) und den Werkstoffen der Körper abhängigen, thermischen Ausdehnungskoeffizienten aufweist, der derart an einen thermischen Ausdehnungskoeffizienten mindestens eines der beiden Körper, insb. der Messmembran (1), angepasst ist, dass eine Differenz zwischen dem thermischen Ausdehnungskoeffizienten der Aktivhartlötung (7) und einem thermischen Ausdehnungskoeffizienten des Körpers, an den die Anpassung erfolgt, insb. der Messmembran (1), betragsmäßig geringer ist, als eine Differenz zwischen einem thermischen Ausdehnungskoeffizienten des Aktivhartlots und dem thermischen Ausdehnungskoeffizienten des Körpers.

2.  Drucksensor gemäß Anspruch 1, bei dem

    - mindestens einer der Körper, insb. die Messmembran (1) oder die Messmembran (1) und der Grundkörper (3), aus einer Oxidkeramik, insb. aus Aluminiumoxid, besteht, und
    - das Aktivhartlot die Komponenten Zirkonium, Nickel und Titan aufweist.

3.  Drucksensor gemäß Anspruch 2, bei dem das Aktivhartlot Kupfer und/oder Aluminium enthält.

4.  Drucksensor gemäß Anspruch 1, bei dem die die Aktivhartlötung aus einem Aktivhartlot hergestellt ist, das die Zusammensetzung $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$, oder $Zr_{11}Ni_8Ti_{34}Cu_{47}$ aufweist.

5.  Verfahren zur Herstellung eines Drucksensors gemäß Anspruch 1, bei dem das Aktivhartlot zur Herstellung der Aktivhartlötung (7) des Drucksensors durch ein Verfahren bestimmt wird, bei dem mindestens eine Messung durchgeführt wird, bei der ein thermischer Ausdehnungskoeffizient ($\alpha_{AHL}$) einer mit einem Aktivhartlot ausgeführten Aktivhartlötung (7') bestimmt wird, deren Abmessungen gleich den Abmessungen der Aktivhartlötung (7) des Drucksensors sind und mittels welcher Aktivhartlötung (7') zwei Messkörper, insb. zwei Messkörper aus dem Werkstoff des Körpers des Drucksensors, an den die Anpassung erfolgt, miteinander verbunden sind.

6.  Verfahren gemäß Anspruch 5,

    -- wobei die Messkörper (19) auf deren dem jeweils anderen Messkörper (19) zugewandten Stirnseite jeweils eine Elektrode (21) aufweisen und die Elektroden (21) einen Kondensator mit einer von deren von einer temperaturabhängigen Höhe (h) der Aktivhartlötung (7') abhängigen Elektrodenabstand abhängigen Kapazität bilden,

    und wobei bei der Durchführung der mindestens einen Messung die Kapazität (C(T), ((To)) des Kondensators bei mindestens zwei verschiedenen Temperaturen der Aktivhartlötung (7') gemessen wird und anhand deren Abhängigkeit von der Höhe (h) der Aktivhartlötung (7'), insb. anhand deren Abhängigkeit von der Höhe (h) der Aktivhartlötung (7') und einer Temperaturabhängigkeit der gemessenen Kapazitäten (C(T), C(To)), insb. einer von einer Temperaturabhängigkeit der Elektrodenflächen (A(T)) der Elektroden (21) abhängige Temperaturabhängigkeit der gemessenen Kapazitäten (C(T), C(To)), der thermische Ausdehnungskoeffizient der Aktivhartlötung (7') bestimmt wird.

7.  Verfahren gemäß Anspruch 6, bei dem

    - die Elektroden (21) baugleich und kreisscheibenförmig sind, und
    - die Temperaturabhängigkeit der Elektrodenflächen (A(T)) der Elektroden (21) anhand eines temperaturabhängen Durchmessers (d(T)) der Elektroden (21) berücksichtigt wird, der näherungsweise linear mit einem Elektrodenausdehnungskoeffizient ($\alpha_E$) mit der Temperatur ansteigt.

8.  Verfahren nach Anspruch 7, wobei der Elektrodenausdehnungskoeffizient ($\alpha_E$) anhand von Kapazitätsmessungen bestimmt wird, welche Kapazitätsmessungen mit einer ersten Vorrichtung und mit einer zweiten Vorrichtung ausgeführt werden, wobei die erste Vorrichtung umfasst:

    - die zwei Messkörper (19)
    - eine Heizvorrichtung (23) und
    - einer an die Elektroden (21) angeschlossenen Messchaltung (25), welche Messchaltung (25) die Kapazität des Kondensators bei den mindestens zwei verschiedenen Temperaturen der Aktivhartlötung (7') misst,

    und wobei die zweite Vorrichtung sich von der ersten Vorrichtung ausschließlich darin unterscheidet, dass der Durchmesser der Elektroden (21) der zweiten Vorrichtung von dem Durchmesser der Elektroden (21) der ersten Vorrichtung verschieden ist.

9.  Verfahren gemäß Anspruch 8, wobei Elektroden (21) verwendet werden, welche Elektroden (21) scheibenförmig sind und im Vergleich zur Höhe (h) der Aktivhartlötung (7') eine Scheibendicke aufweisen, die in der Größenordnung von zwei Zehnerpotenzen geringer ist als die Höhe (h) der Aktivhartlötung (7').

10. Verfahren gemäß Anspruch 5, bei dem das Aktivhartlot, aus dem die Aktivhartlötung (7) des Drucksensors hergestellt wird, ermittelt wird, indem

- zur Aktivhartlötung der Körper des Drucksensors geeignete Testlote unterschiedlicher Zusammensetzung, insb. Komponenten eines zur Aktivhartlötung der Körper geeigneten Ausgangslots enthaltende Testlote, ermittelt werden,

- die thermischen Ausdehnungskoeffizienten von mit den Testloten erzeugten Aktivhartlötungen (7') gemessen werden, und

- anhand der gemessenen Ausdehnungskoeffizienten dasjenige Testlot als Aktivhartlot ermittelt wird, bei dem eine Differenz zwischen dem thermischen Ausdehnungskoeffizienten der damit hergestellten Aktivhartlötung (7') und dem thermischen Ausdehnungskoeffizienten mindestens eines der Körper betragsmäßig den geringsten Wert aufweist.

11. Verfahren gemäß Anspruch 10, bei dem

- mindestens eines der Testlote ausschließlich aus den Komponenten des Ausgangslots besteht, und/oder
- mindestens eines der Testlote zusätzlich zu den Komponenten des Ausgangslots mindestens eine weitere Komponente (K) aufweist.

12. Verfahren gemäß Anspruch 10, bei dem

- mindestens einer der Körper aus Oxidkeramik, insb. aus Aluminiumoxid besteht,
- die Testlote die Komponenten Zirkonium, Nickel und Titan aufweisen, und
- mindestens ein Testlot ausschließlich aus Zirkonium, Nickel und Titan besteht und/oder mindestens ein Testlot Zirkonium, Nickel und Titan und mindestens eine weitere Komponente, insb. Kupfer oder Aluminium, aufweist.

13. Verfahren gemäß Anspruch 5 oder 10, bei dem ein thermischer Ausdehnungskoeffizient ($\alpha_{AHL}$) einer mit einem Aktivhartlot, insb. einem Ausgangslot oder einem Testlot, ausgeführten Aktivhartlötung (7') bestimmt wird, das die Zusammensetzung $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$, oder $Zr_{11}Ni_8Ti_{34}Cu_{47}$ aufweist.

**Claims**

1. Pressure sensor, with

- two bodies connected to one another by means of an active brazing (7) produced by the active brazing of an active brazing solder, wherein a first of the two bodies is a measuring membrane (1) which can be deformed elastically depending on the pressure and can be exposed to a pressure (p), particularly a ceramic measuring membrane (1), and wherein the second of the two bodies is a base body (3), particularly a ceramic base body (3), wherein the base body (3) and the measuring membrane (1) are connected to an active brazing (7), wherein said active brazing (7) connects an outer edge of the measuring membrane (1), including a pressure chamber (5), to an outer edge of a front face of the base body (3) facing towards the measuring membrane (1),

- wherein the active brazing (7) has a thermal expansion coefficient that depends on the dimensions of the active brazing (7) and the materials of the bodies, wherein said coefficient is adapted to a thermal expansion coefficient of at least one of the two bodies, particularly the measuring membrane (1), in such a way that a difference between the thermal expansion coefficient of the active brazing (7) and a thermal expansion coefficient of the body to which the coefficient is adapted, particularly the measuring membrane (1), is lower, in terms of its value, than a difference between a thermal expansion coefficient of the active brazing solder and the thermal expansion coefficient of the body.

2. Pressure sensor as claimed in Claim 1, wherein

- at least one of the bodies, particularly the measuring membrane (1) or the measuring membrane (1) and the base body (3), is made from an oxide ceramic, particularly aluminum oxide,

and

- the active brazing solder has the components zirconium, nickel and titanium.

3. Pressure sensor as claimed in Claim 2, wherein the active brazing solder contains copper and/or aluminum.

4. Pressure sensor as claimed in Claim 1, wherein the active brazing is made from an active brazing solder comprising $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$ or $Zr_{11}Ni_8Ti_{34}Cu_{47}$.

5. Procedure for the production of a pressure sensor as claimed in Claim 1, wherein the active brazing solder to create the active brazing (7) of the pressure sensor is determined by a process whereby at least one measurement is performed in the course of which a thermal expansion coefficient ($\alpha_{AHL}$) of an

active brazing (7') performed with an active brazing solder is determined, wherein the dimensions of said active brazing are equal to the dimensions of the active brazing (7) of the pressure sensor and by means of said active brazing (7') two measuring bodies, particularly two measuring bodies made from the material of the body of the pressure sensor to which the adaptation is performed, are connected to one another.

6. Procedure as claimed in Claim 5,

wherein the measuring bodies (19) each have an electrode (21) on their front face facing towards the other respective measuring body (19) and the electrodes (21) form a capacitor with a capacity that depends on the distance between the electrodes, said distance being dependent on a height (h) of the active brazing (7') that depends on the temperature,
and wherein, when the at least one measurement is performed, the capacity (C(T), ((To)) of the capacitor is measured at at least two different temperatures of the active brazing (7') and the thermal expansion coefficient of the active brazing (7') is determined using the dependence on the height (h) of the active brazing (7'), particularly using the dependence on the height (h) of the active brazing (7') and a temperature-dependence of the measured capacities (C(T), C(To)), particularly a temperature-dependence of the measured capacities (C(T), C(To)) that depends on a temperature-dependence of the electrode surfaces (A(T)) of the electrodes (21).

7. Procedure as claimed in Claim 6, wherein

- the electrodes (21) are identical in design and in the form of a circular disk, and
- the temperature-dependence of the electrode surfaces (A(T)) of the electrodes (21) are considered on the basis of a temperature-dependent diameter (d(T)) of the electrodes (21), which increases with the temperature in an approximately linear manner with an electrode expansion coefficient ($\alpha_E$).

8. Procedure as claimed in Claim 7, wherein the electrode expansion coefficient ($\alpha_E$) is determined on the basis of capacity measurements, wherein said capacity measurements are performed with a first apparatus and with a second apparatus, wherein the first apparatus comprises:

- the two measuring bodies (19)
- a heating apparatus (23) and
- a measurement circuit (25) connected to the electrodes (21), wherein said measurement circuit (25) measures the capacity of the capacitor at the at least two different temperatures of the active brazing (7'),

and wherein the second apparatus differs from the first apparatus only in that the diameter of the electrodes (21) of the second apparatus is different from the diameter of the electrodes (21) of the first apparatus.

9. Procedure as claimed in Claim 8, wherein electrodes (21) are used, wherein said electrodes (21) are in the form of a disk and have a disk thickness in relation to the height (h) of the active brazing (7'), which is less than the height (h) of the active brazing (7') on a scale of two powers of ten.

10. Procedure as claimed in Claim 5, wherein the brazing solder from which the active brazing (7) of the pressure sensor is made, is determined in that

- suitable test solders of different compositions are determined for the active brazing of the bodies of the pressure sensor, particularly test solders containing components of an initial solder suitable for the active brazing of the bodies,
- the thermal expansion coefficients of the active brazings (7') performed with the test solders are measured, and
- the expansion coefficients that are measured are used to identify the brazing solder as being the test solder where a difference between the thermal expansion coefficient of the active brazing (7') produced with it and the thermal expansion coefficient of at least one of the bodies has the lowest value.

11. Procedure as claimed in Claim 10, wherein

- at least one of the test solders is made exclusively from the components of the initial solder, and/or
- at least one of the test solders has at least one other component (K) in addition to the components of the initial solder.

12. Procedure as claimed in Claim 10, wherein

- at least one of the bodies is made from oxide ceramic, particularly aluminum oxide,
- the test solders have the components zirconium, nickel and titanium, and
- at least one test solder is made exclusively from zirconium, nickel and titanium and/or at least one test solder has zirconium, nickel and titanium and at least one other component, particularly copper or aluminum.

**13.** Procedure as claimed in Claim 5 or 10, wherein a thermal expansion coefficient ($\alpha_{AHL}$) of an active brazing (7') produced with an active brazing solder, particularly an initial solder or a test solder, is determined, wherein said solder has the composition $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$ or $Zr_{11}Ni_8Ti_{34}Cu_{47}$.

**Revendications**

**1.** Capteur de pression, avec

- deux corps reliés l'un à l'autre par l'intermédiaire d'un brasage actif (7) réalisé par brasage fort d'une brasure active, un premier des deux corps étant une membrane de mesure (1) déformable élastiquement en fonction de la pression et pouvant être soumise à une pression (p), notamment une membrane de mesure (1) en céramique, et le deuxième des deux corps étant un corps de base (3), notamment un corps de base (3) en céramique, le corps de base (3) et la membrane de mesure (1) étant reliés entre eux par un brasage actif (7), lequel brasage actif (7) relie un bord extérieur de la membrane de mesure (1), en incluant une chambre de pression (5), à un bord extérieur d'une face frontale du corps de base (3) tournée vers la membrane de mesure (1),
- le brasage actif (7) présentant un coefficient de dilatation thermique dépendant des dimensions du brasage actif (7) et des matériaux des corps, lequel coefficient est adapté à un coefficient de dilatation thermique d'au moins l'un des deux corps, notamment de la membrane de mesure (1), de telle sorte qu'une différence entre le coefficient de dilatation thermique du brasage actif (7) et un coefficient de dilatation thermique du corps auquel l'adaptation est effectuée, notamment de la membrane de mesure (1), est inférieure en valeur absolue à une différence entre un coefficient de dilatation thermique de la brasure active et le coefficient de dilatation thermique du corps.

**2.** Capteur de pression selon la revendication 1, pour lequel

- au moins l'un des corps, notamment la membrane de mesure (1) ou la membrane de mesure (1) et le corps de base (3), est constitué d'une céramique d'oxyde, notamment d'oxyde d'aluminium,

et

- la brasure active présente les composants zirconium, nickel et titane.

**3.** Capteur de pression selon la revendication 2, pour lequel la brasure active contient du cuivre et/ou de l'aluminium.

**4.** Capteur de pression selon la revendication 1, pour lequel le brasage actif est réalisé à partir d'une brasure active présentant la composition $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$ ou $Zr_{11}Ni_8Ti_{34}Cu_{47}$.

**5.** Procédé destiné à la fabrication d'un capteur de pression selon la revendication 1, pour lequel la brasure active pour la fabrication du brasage actif (7) du capteur de pression est déterminée par un procédé dans lequel on effectue au moins une mesure au cours de laquelle on détermine un coefficient de dilatation thermique ($\alpha_{AHL}$) d'un brasage actif (7') réalisé avec une brasure active, brasage actif dont les dimensions sont égales aux dimensions du brasage actif (7) du capteur de pression et au moyen duquel brasage actif (7') deux corps de mesure, notamment deux corps de mesure réalisés dans le matériau du corps du capteur de pression auquel l'adaptation est effectuée, sont reliés entre eux.

**6.** Procédé selon la revendication 5,

pour lequel les corps de mesure (19) présentent chacun une électrode (21) sur leur face frontale tournée vers l'autre corps de mesure (19) et les électrodes (21) forment un condensateur dont la capacité dépend de la distance entre les électrodes, laquelle distance dépend d'une hauteur (h) du brasage actif (7') dépendant de la température,
et pour lequel, lors de la réalisation de l'au moins une mesure, la capacité (C(T), ((To)) du condensateur est mesurée à au moins deux températures différentes du brasage actif (7') et le coefficient de dilatation thermique du brasage actif (7') est déterminé, notamment à l'aide de sa dépendance de la hauteur (h) du brasage actif (7') et d'une dépendance de la température des capacités mesurées (C(T), C(To)), notamment d'une dépendance de la température des capacités mesurées (C(T), C(To)) dépendant d'une dépendance de la température des surfaces d'électrode (A(T)) des électrodes (21).

**7.** Procédé selon la revendication 6, pour lequel

- les électrodes (21) sont de construction identique et en forme de disque circulaire, et

- la dépendance de la température des surfaces d'électrode (A(T)) des électrodes (21) est prise en compte à l'aide d'un diamètre (d(T)) des électrodes (21) dépendant de la température, qui augmente de manière approximativement linéaire avec un coefficient de dilatation d'électrode ($\alpha_E$) avec la température.

8. Procédé selon la revendication 7, pour lequel le coefficient de dilatation d'électrode ($\alpha_E$) est déterminé à partir de mesures de capacité, lesquelles mesures de capacité sont effectuées avec un premier dispositif et avec un deuxième dispositif, le premier dispositif comprenant :

   - les deux corps de mesure (19)
   - un dispositif de chauffage (23) et
   - un circuit de mesure (25) raccordé aux électrodes (21), lequel circuit de mesure (25) mesure la capacité du condensateur aux au moins deux températures différentes du brasage actif (7'),

   et pour lequel le deuxième dispositif diffère du premier dispositif uniquement en ce que le diamètre des électrodes (21) du deuxième dispositif est différent du diamètre des électrodes (21) du premier dispositif.

9. Procédé selon la revendication 8, pour lequel on utilise des électrodes (21), lesquelles électrodes (21) sont en forme de disque et présentent, par rapport à la hauteur (h) du brasage actif (7'), une épaisseur de disque qui est de l'ordre de deux puissances de dix inférieure à la hauteur (h) du brasage actif (7').

10. Procédé selon la revendication 5, pour lequel la brasure active, à partir de laquelle le brasage actif (7) du capteur de pression est réalisée, est déterminée par le fait que

    - des brasures de test appropriées, de différentes compositions, sont déterminées pour le brasage actif des corps du capteur de pression, notamment des brasures de test contenant des composants d'une brasure initiale appropriée pour le brasage actif des corps,
    - l'on mesure les coefficients de dilatation thermique des brasages actifs (7') réalisés avec les brasures de test, et
    - à l'aide des coefficients de dilatation mesurés, on détermine comme brasure active la brasure de test pour laquelle une différence entre le coefficient de dilatation thermique du brasage actif (7') ainsi réalisé et le coefficient de dilatation thermique d'au moins l'un des corps présente la valeur la plus faible en valeur absolue.

11. Procédé selon la revendication 10, pour lequel

    - au moins l'une des brasures de test est constituée exclusivement des composants de la brasure initiale, et/ou
    - au moins l'une des brasures de test présente, en plus des composants de la brasure initiale, au moins un autre composant (K).

12. Procédé selon la revendication 10, pour lequel

    - au moins l'un des corps est constitué de céramique d'oxyde, notamment d'oxyde d'aluminium,
    - les brasures de test présentent les composants zirconium, nickel et titane, et
    - au moins une brasure de test se compose exclusivement de zirconium, de nickel et de titane et/ou au moins une brasure de test présente du zirconium, du nickel et du titane et au moins un autre composant, notamment du cuivre ou de l'aluminium.

13. Procédé selon la revendication 5 ou 10, pour lequel on détermine un coefficient de dilatation thermique ($\alpha_{AHL}$) d'un brasage actif (7') réalisé au moyen d'une brasure active, notamment une brasure initiale ou une brasure de test présentant la composition $Zr_{63}Ni_{22}Ti_{15}$, $Zr_{60}Ni_8Ti_2Cu_{20}Al_{10}$, $Zr_{54,5}Ni_8Ti_{7,5}Cu_{20}Al_{10}$, $Zr_{47}Ni_{35}Ti_{18}$, $Zr_{58}Ni_{23}Ti_9Cu_{10}$, $Zr_{52,5}Ni_{14,6}Ti_5Cu_{17,9}Al_{10}$, $Zr_{43}Ni_{33}Ti_{24}$ ou $Zr_{11}Ni_8Ti_{34}Cu_{47}$.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 490807 A1
- DE 102012110618 A1
- DE 102010043119 A1
- DE 102011005665 A1